**Europäisches Patentamt**

**European Patent Office**

**Office européen des brevets**

(19)

(11) Veröffentlichungsnummer: **0 217 099**
**B1**

(12) # EUROPÄISCHE PATENTSCHRIFT

(45) Veröffentlichungstag der Patentschrift:
20.06.90

(51) Int. Cl.⁵: **C08G 61/12**

(21) Anmeldenummer: 86111554.1

(22) Anmeldetag: 21.08.86

(54) **Verfahren zur elektrochemischen Beschichtung von Kohlenstoff-Fasern.**

(30) Priorität: 30.08.85 DE 3531019

(43) Veröffentlichungstag der Anmeldung:
08.04.87 Patentblatt 87/15

(45) Bekanntmachung des Hinweises auf die Patenterteilung:
20.06.90 Patentblatt 90/25

(84) Benannte Vertragsstaaten:
BE DE FR GB NL

(56) Entgegenhaltungen:
EP-A- 0 129 070

CHEMICAL ABSTRACTS, Band 99, Nr. 24, 12.
Dezember 1983, Zusammenfassung Nr. 196277g,
Columbus, Ohio, US; & JP-A-58 89 639 (TEIJIN
LTD) 28-05-1983
CHEMICAL ABSTRACTS, Band 102, Nr. 6, 11.
Februar 1985, Zusammenfassung Nr. 48759f, Columbus,
Ohio, US; & JP-A-59 157 974 (KAO CORP.) 07-09-1984
CHEMICAL ABSTRACTS, Band 102, Nr. 20, 20. Mai 1985,
Zusammenfassung Nr. 167274d, Columbus, Ohio, US; R.
LAZZARONI et al.: "Electrochemical synthesis of
heteroaromatic polymers: new compounds and novel
substrates", & MOL. CRYST. LIQ.
CRYST. 1985, 118(1-4), 249-52emale rats", & ARCH.
TOXICOL. 1981, 49(1), 57-64ion of the echographic
A-lines" 000

(73) Patentinhaber: BASF Aktiengesellschaft,
Carl-Bosch-Strasse 38, D-6700 Ludwigshafen(DE)

(72) Erfinder: Naarmann, Herbert, Dr., Haardtblick 15,
D-6719 Wattenheim(DE)
Erfinder: Haaf, Franz, Dr., Leistadter Strasse 9,
D-6702 Bad Duerkheim(DE)
Erfinder: Fahrbach, Gerhard, Dr., Schoenauer Strasse 3,
D-6831 Plankstadt(DE)

(56) Entgegenhaltungen: (Fortsetzung)
Die Akte enthält technische Angaben, die nach dem
Eingang der Anmeldung eingereicht wurden und die
nicht in dieser Patentschrift enthalten sind.

## Beschreibung

Die Erfindung betrifft ein Verfahren zum Aufbringen einer Schicht aus elektrisch leitfähigen Polymeren aus Fasern, Fäden oder flächigen Gebilden.

Die elektrochemische Polymerisation von Pyrrol, gegebenenfalls in Mischung mit Comonomeren, ist bekannt (vgl. u.a. US-PS 3 574 072 und DE-A 3 049 551). Hierbei werden Pyrrol bzw. die Pyrrol/Comonomer-Mischungen in einem in aller Regel organischen Elektrolyt-Lösungsmittel in Gegenwart von Leitsalzen elektrolysiert, wobei sich durch anodische Oxidation die Pyrrol-Polymeren bilden und an der Anode abscheiden. Die Leitsalze, beispielsweise die Alkalimetall-, Ammonium- oder Phosphonium-Salze mit Anionen aus der Gruppe $BF_4^-$, $AsF_6^-$, $SbF_6^-$, $PF_6^-$, $SbCl_6^-$, $ClO_4^-$, $HSO_4^-$ oder $SO_4^{2-}$, werden hierbei zumindest teilweise in die Pyrrol-Polymeren – wahrscheinlich in komplex gebundener Form – eingelagert und verleihen den so hergestellten Pyrrol-Polymeren eine hohe elektrische Leitfähigkeit bis zu etwa $10^2 Ohm^{-1}cm^{-1}$.

Aus der älteren Patentanmeldung P 3 327 012 (EP-A 84 108 455) ist ein Verfahren zur elektrochemischen Polymerisation von Pyrrol bekannt, bei dem man Pyrrol in Gegenwart von Leitsalzen in Elektrolytlösungsmitteln durch anodische Oxidation auf einer flächenförmig ausgebildeten Anode polymerisiert, wobei man flächige Gebilde mit großer Oberfläche, wie Gewebe, Gewirke, Geflechte oder Netze verwendet.

Aufgabe der Erfindung ist es, ein Verfahren zum Aufbringen einer Schicht aus elektrisch leitfähigen Polymeren auf Fasern, Fäden oder flächige Gebilde aus Kohlenstoff zu schaffen, das in technisch einfacher Weise durchführbar ist und das eine gute Haftung der Schicht des leitfähigen Polymeren auf den Fasern, Fäden oder flächigen Gebilden bewirkt sowie Verfahrensprodukte mit guter elektrischer Leitfähigkeit liefert.

Die Aufgabe der Erfindung wird durch ein Verfahren gelöst, bei dem man auf Kohlenstoff-Fasern oder -Fäden oder flächige Gebilde aus Kohlenstoff-Fasern oder -Fäden Sulfonsäuren eines Phthalocyanins oder Porphyrins aufbringt, die Fasern, Fäden oder flächigen Gebilde in einer Lösung, die monomeres Pyrrol oder Thiophen enthalten, als Anode schaltet und die Monomeren anodisch polymerisiert.

Nach dem Verfahren der Erfindung werden Kohlenstoff-Fasern oder -Fäden sowie flächige Gebilde aus Kohlenstoff-Fasern oder -Fäden erhalten, die sich durch besonders hohe elektrische Leitfähigkeit auszeichnen.

Die elektrochemisch aufgebrachte Polymerisatschicht ist mechanisch festhaftend. Das beschichtete Material läßt sich ohne Schädigung drehen, rollen oder knicken. Durch das Verfahren werden die höhermolekularen Sulfonsäuren in den Faserhohlräumen fest verankert und sind mit wäßrigen Systemen nicht mehr eluierbar.

Nach dem Verfahren können Kohlenstoff-Fasern oder -Fäden mit einer elektrisch leitfähigen Schicht überzogen werden. Kohlenstoffasern oder -Fäden werden beispielsweise durch pyrolytische Verfahren durch Tempern von Fäden und Geweben bei Temperaturen oberhalb von 600°C erhalten.

Es können aber auch nach dem Verfahren flächige Gebilde aus Kohlenstoff-Fasern oder -Fäden mit einer elektrisch leitfähigen Polymerenschicht überzogen werden. Solche flächigen Gebilde sind z.B. Gewebe, Gewirke, Geflechte, Netze oder faservliesartige Stoffe. Derartige flächige Gebilde erhält man z.B. nach bekannten Verfahren: Diese Gebilde sind ebenfalls durch Pyrolysemethoden zu erhalten, wenn direkt flächige Gewebe beim Pyrolyseprozeß eingesetzt werden.

Auf die Kohlenstoff-Fasern oder -Fäden bzw. auf die flächigen Gebilde wird zunächst eine Sulfonsäure eines Phthalocyanins oder Porphyrins aufgebracht. Unter diesem Begriff versteht man die Sulfonierungsprodukte von Phthalocyaninen oder Porphyrinen. Näheres ist in "Chemie-Lexikon" von H. Römb, 6. Aufl., Band 3, Seite 4918 ff beschrieben. Besonders eignen sich die Sulfonsäuren von Metallphthalocyanin, wie das Kupferderivat des Tetrabenzo- oder Tetraazaporphins. Ebenso geeignet sind Zn-, Co-, Ni- und Pt-Phthalooyanine.

Das Aufbringen der Sulfonsäure von Phthalocyaninen bzw. von Porphyrinen erfolgt am zweckmäßigsten aus einer Lösung. Die Lösungen enthalten zwischen 0,01 und 20% der Sulfonsäure. Als Lösungsmittel eignen sich z.B. wäßrige oder organische Systeme. Wenn die Sulfonsäure in Form ihres Alkalisalzes, z.B. des Na- oder K-Salzes oder in Form eines Ammoniumsalzes verwendet wird, dient zweckmäßig Wasser als Lösungsmittel. Außerdem können Acetonitril, Methylenchlorid oder ihre Gemische, z.B. mit Dimethylenformamid oder N-Methylpyrrolidon verwendet werden, wenn die freien Sulfonsäuren oder die Ammoniumsalze eingesetzt werden.

Die so behandelten Fasern, Fäden oder flächigen Gebilde werden dann getrocknet, so daß die Fäden bzw. Fadenanteile mit einer Schicht der Sulfonsäure überzogen sind.

Die Fasern oder flächigen Gebilde werden nun in eine Lösung getaucht, die Monomere enthält.

Die Monomeren werden ausgewählt aus Pyrrol und Thiophen.

Als Lösungsmittel eignen sich z.B. organische Lösungsmittel wie Methanol, Ethanol, Polyole, Aceton oder Tetrahydrofuran. Geeignet sind aber auch Pyridin, Acetonitril, Methylenchlorid, Eisessig, Propylencarbonat oder Dimethylsulfoxid. Es kann aber auch in Wasser oder Mischungen von Wasser mit einem der oben genannten mischbaren Lösungsmitteln gearbeitet werden.

Die Lösungen können zur Erhöhung der Leitfähigkeit einen Elektrolyten enthalten. Hierzu eignen sich die bekannten, sogenannten Leitsalze, insbesondere die Alkali- oder Ammoniumsalze von $PF_6^-$, $ClO_4^-$,

PF$_4^-$, AsF$_6^-$. Weiterhin kommen Anionen organischer Säuren wie Benzolsulfonsäure oder Toluolsulfonsäure oder Trifluorethansulfonsäure in Frage. Falls Leitsalze verwendet werden, sind sie in den Lösungen von 0,01 bis 1 Mol enthalten.

Die mit der Sulfonsäure eines Phthalocyanins oder Porphyrins beschichteten Fasern, Fäden oder flächigen Gebilde werden in der Lösung als Anode geschaltet. Die Monomeren werden der elektrochemischen Polymerisation unterworfen. Es wird hierzu beispielsweise eine Stromdichte von 0,01 bis 20 mA/cm$^2$ verwendet. Es werden meistens Spannungen im Bereich von 0,5 bis 50 V angelegt. Als Kathode verwendet man zweckmäßig reduktionsstabile Elektronenleiter wie Nickel, Edelstahl, Platin oder auch Kohlenstoffmaterial. Die Polymerisation der Monomeren kann auch im Wechselfeld vorgenommen werden. Die Stromdichten und Spannungen können in dem genannten Bereich liegen. Man verwendet zweckmäßig Frequenzen im Bereich von 50 bis 100 000 Hz. Derartige Verfahren zur anodischen Polymerisation der Monomeren sind bekannt. Sie sind beispielsweise in der oben angegebenen Literatur näher beschrieben.

Die Herstellung nach den erfindungsgemäßen Verfahren führt zu Produkten, die thermostabil sind · und bei 180°C keinen Leitfähigkeitsverlust zeigen. Derselbe gilt für die Stabilität der Leitfähigkeit in wäßrigen Systemen.

Beispiel 1

100 Teile Kohlenstoff-Fasern vom Durchmesser 100 µm werden in eine 10%ige wäßrige Lösung der Trisulfonsäure des Kupferphthalocyanins getaucht. Die Fasern werden der Lösung entnommen und für die Dauer von 3 Stunden bei 100°C getrocknet. Danach werden die Fasern in ein Elektrolysebad eingebracht, das 0,05 Gew.-Teile Pyrrol und 0,01 Gew.-Teile des Tributylammoniumsalzes oder Phenylsulfonsäure auf 100 Gew.-Teile Acetonitril enthält. Die Kohlenstoff-Fasern werden als Anode geschaltet. Es wird eine Stromdichte von 2 mAmp/cm$^2$ eingehalten. Die anodische Oxidation des Pyrrols nimmt eine Zeit von 30 Minuten in Anspruch.

Auf den Fasern hat sich nun eine Schicht des elektrisch leitfähigen Polypyrrols ausgebildet. Die so behandelten Fasern haben eine Leitfähigkeit von 150 S/cm. Die Leitfähigkeit bleibt bei einer Lagerung von 100°C an Luft für die Dauer von 3 Monaten unverändert.

Die Ausgangsfasern haben eine Leitfähigkeit von 10 bis 20 S/cm.

Beispiele 2 bis 9

Es wurde entsprechend Beispiel 1 gearbeitet, jedoch die in der Tabelle angegebenen Varianten durch-geführt.

| Nr. | Matrix | Sulfonsäure | Elektrolyt. | Strom-dichte in mAmp/cm$^2$ | Leit-fähig-keit S/cm |
|---|---|---|---|---|---|
| 2 | Kohlenstoff-fasergewebe | Disulfonsäure des Cu-Phthalo-cyanins | Acetonitril + 1 % Dimethyl-formamdi | 5 | 180 |
| 3 | " | " | " | 10 | 165 |
| 4 | " | Tetrasulfonsäure des Phenylporphyrins | Acetonitril | 2 | 120 |
| 5 | " | Tetrasulfonsäure des Fe-Phenyl-prophyrins | " | 2 | 130 |
| 6 | " | Tetrasulfonsäure des Zn-Phenyl-porphyrins | " | 4 | 110 |
| 7 | " | Tetrasulfonsäure des Co-Phenyl-porphyrins | " | 2 | 140 |
| 8 | Kohlenstoff-fasern | Na-Salz der Tri-sulfonsäure des Cu-Phthalocyanins | " | 5 | 120 |
| 9 | Kohlenstoff-fasergewebe | Disulfonsäure des Cu-Phthalo-cyanins | Propylen-carbonat | 2 | 85 |

In Beispiel 9 wurde als Monomeres Thiophen und als Leitsalz Tetrabutylammoniumsalz der PF$_6$-Säure verwendet.

Es wurden in allen Beispielen festhaftende Polymerüberzüge auf den Fasern erhalten.

**Patentansprüche**

Verfahren zum Aufbringen einer Schicht aus elektrisch leitfähigen Polymeren auf Kohlenstoff-Fasern oder -Fäden oder daraus bestehende flächige Gebilde durch elektrochemische Abscheidung der Polymeren an den als Anode geschalteten Kohlenstoff-Fasern bzw. -Fäden aus einer Lösung die Pyrrol oder Thiophen als Monomere enthalten, dadurch gekennzeichnet, daß die Kohlenstoff-Fasern bzw. -Fäden zuvor mit einer Sulfonsäure eines Phthalocyanins oder eines Porphyrins behandelt worden sind.

**Claims**

A process for applying a layer of an electrically conductive polymer onto carbon fibers or filaments or sheet-like structures consisting thereof by electrochemical deposition of the polymer onto the carbon fibers or filaments which have been made the anode from a solution which contains pyrrole or thiophene as the monomer, wherein the carbon fibers or filaments have been treated beforehand with a sulfonic acid of a phthalocyanine or of a porphyrin.

**Revendications**

Procédé pour revêtir d'une couche de polymères conducteurs de l'électricité des fibres ou des fils de carbone ou des produits en nappe constitués de ces fibres ou fils, par dépôt électrochimique des polymères sur les fibres ou fils de carbone montés en tant qu'anode, à partir d'une solution, qui comportent comme monomères du pyrrole ou du thiophène, caractérisé en ce que les fibres ou fils de carbone ont été traités auparavant par un acide sulfonique d'une phtalocyanine ou d'une porphyrine.